# EUROPEAN PATENT APPLICATION

(11) **EP 4 835 101 A1**
(43) Date of publication of application: **04.11.2026**
(21) Application number: 26165891.8
(22) Date of filing: 18.03.2026
(51) Int. Cl.: C21C 5/52, C21B 13/00, C21C 5/46, F27B 3/18, F27D 3/00, F27D 3/10, F27D 99/00

(54) **TRANSFER VESSEL FOR A HOT MATERIAL**

(30) Priority: 01.05.2025 NL 2040297
(71) Applicant: Metix (Proprietary) Limited, 2196 Gauteng (ZA)
(72) Inventor: Lotter, Gabriel Jacobus, Morningside, Sandton, Gauteng, (ZA); Le Roux, Jean Jacques, Morningside, Sandton, Gauteng, (ZA); Malan, Stephanus Willem, Morningside, Sandton, Gauteng, (ZA)
(74) Representative: Reddie & Grose LLP

(57) **Abstract**

A hot material transfer vessel 10 comprises a body 12 having a top 14, a bottom 16 and a sidewall 18 extending between the top and the bottom and defining a chamber 20 for holding the hot material 22 to be transferred. The vessel comprises a selectively openable and closable inlet 24 for the material into the chamber and an openable and closable outlet 26 for the material from the chamber. The vessel further comprises at least one pressure balancing conduit 28 extending between a first end 30 thereof located in a region 32 which is in gas flow communication with the outlet 26 and a second end 34 thereof communicating with a region 36 of the chamber towards the top of the body. A valve assembly 46 comprises outlet valve 50 for opening and closing the outlet and conduit valve 56 for opening and closing the conduit.

## Description

### INTRODUCTION AND BACKGROUND

This invention relates to vessels and more particularly to a transport vessel for transporting material from a source to a destination, such as, but not limited to, a vessel for transporting hot directly reduced iron from a source, such as a direct reduction plant, to a subsequent processing facility, such as an electric smelting furnace.

Traditionally, primary steel production has been achieved through two main methods. The first is the so-called Blast Furnace-Basic Oxygen Furnace (BF-BOF) method. In this method, iron ore is reduced in a blast furnace (BF) using reductants like coke and coal. The molten iron produced is then transferred to a basic oxygen furnace (BOF), where oxygen is blown through it to remove excess carbon, thereby producing steel. The steel is further refined in a ladle furnace (LF) before being cast into the desired form.

The second is the so-called Direct Reduced Iron-Electric Arc Furnace (DRI-EAF) method. In this method, direct reduced iron (DRI) is produced in a direct reduction plant (DRP), also known as a reduction furnace (RF). Some producers may use kilns to pre-reduce iron ore or pellets. The DRI is then transferred to an electric arc furnace (EAF), which operates in an oxidizing environment to melt and decarburize the charge materials, resulting in steel production. The DRI can be introduced into the EAF either hot or cold, and additional ferrous materials, such as liquid pig iron or recycled scrap, may also be added. Subsequent refining in the LF and casting processes are like those in the BF-BOF method. While the BF-BOF method remains the dominant steelmaking method, the DRI-EAF method has been gaining industry traction due to factors such as the scarcity and price volatility of scrap, and the low impurity content of DRI, which enhances steel quality.

Recently, a third method has been industrialized, namely the Direct Reduced Iron-Electric Smelting Furnace-Basic Oxygen Furnace (DRI-ESF-BOF) method. In this method, hot direct reduced iron (HDRI) is produced in a DRP. The HDRI is then transferred to an electric smelting furnace (ESF), which is designed to melt the HDRI under controlled conditions. Unlike an EAF, the ESF melts the charge materials under reducing conditions, making it suitable for subsequent processing. The molten iron from the ESF is then transferred to a BOF, where oxygen is blown through the molten material to remove excess carbon and produce steel. Subsequent refining in the LF and casting processes are like those in the BF-BOF method. This hybrid method combines the benefits of DRI production with the higher yield efficiency of the ESF and the high productivity of the BOF, providing a flexible and sustainable alternative to traditional steelmaking methods.

However, transfer of the HDRI pellets at elevated temperatures from the DRP to a downstream processing facility, such as the ESF requires an inert atmosphere. An inert atmosphere is crucial because HDRI pellets are highly pyrophoric and can spontaneously ignite upon exposure to oxygen, posing significant fire hazards and potentially leading to equipment blockages due to clinker formation.

### OBJECT OF THE INVENTION

Accordingly, it is an object of the present invention to provide a transfer vessel and method with which the applicant believes the aforementioned disadvantages or dangers may be avoided or which may provide a useful alternative for known transfer mechanisms.

### SUMMARY OF THE INVENTION

According to the invention there is provided a transfer vessel comprising:
- a body having a top, a bottom and a sidewall extending between the top and the bottom and defining a chamber for holding the material;
- a selectively openable and closable inlet for the material into the chamber;
- an openable and closable outlet for the material from the chamber;
- at least one pressure balancing conduit extending between a first end thereof located in a region which is in gas flow communication with the outlet and a second end thereof communicating with a region of the chamber towards the top of the body;
- a first formation extending from a region towards the bottom of the body and defining, together with the body, the region which is in gas flow communication with the outlet;
- a sealing formation located on the first formation and configured to sealingly engage a cooperating sealing formation of a receptacle to form a gas-tight connection between the vessel and the receptacle;
- a valve assembly comprising an outlet valve configured for opening and closing the outlet and a respective conduit valve configured for opening and closing the at least one pressure balancing conduit, the valve assembly being movable between a first position relative to the body in which the outlet valve is in a closed position and the respective conduit valve is in a closed position and a second position relative to the body in which the outlet valve is in an open position and the respective conduit valve is in an open position, such that, during discharge of the material while the vessel is in sealed engagement with the receptacle, pressure in the region which is in gas flow communication with the outlet and pressure in a headspace in the chamber are balanced via the pressure balancing conduit.

The material may be hot material such a hot direct reduced iron (HDRI).

At least part of the sidewall may be made of refractory material.

At least part of the pressure balancing conduit may be formed integrally with the sidewall.

The at least part of the conduit may in the form of a bore defined in the sidewall.

In other embodiments the at least part of the conduit may comprise a pipe embedded or cast into the sidewall.

The inlet may be defined in the top of the body and the outlet may be defined in the bottom of the body so that a main axis of the body extends between the inlet and the outlet.

The first formation may comprise a depending skirt .

The region which is in gas flow communication with the outlet may comprise a cavity defined between the body and the skirt.

The sealing formation may be located on the skirt in a position spaced from the outlet on an opposite side as the inlet.

The body may be elongate and the main axis may be a longitudinal axis.

The cavity may circumscribe the outlet.

The cavity may be annular and the sealing formation may also be annular.

The respective conduit valve may be located at the first end of the at least one pressure balancing conduit.

The valve assembly may comprise a lifting formation for the vessel which circumscribes the body and at least one tie rod connecting the lifting formation to the outlet valve and to the respective conduit valve, the valve assembly being movable between a first axial position relative to the body wherein the outlet valve is in the closed position seating against a valve seat at the outlet and the respective conduit valve is in the closed position and a second axial position relative to the body wherein the outlet valve is in the open position spaced axially away from the valve seat and the respective conduit valve is in the open position.

Also included within the scope of the invention is a method of transferring to a receptacle material from the vessel as defied above, the method comprising:
- with the inlet closed, the valve assembly in the first position and the outlet valve and the respective conduit valve in their closed positions, bringing the sealing formation of the vessel into sealing engagement with the cooperating sealing formation on the receptacle to form a gas tight fit of the vessel on the receptacle and so that the region which is in gas flow communication with the outlet is in communication with the receptacle;
- purging the region with an inert gas;
- causing the valve assembly to move from the first position to the second position, the respective conduit valve to move to the open position and the outlet valve to move to the open position;
- discharging the material into the receptacle; and
- utilizing the at least one pressure balancing conduit to balance the pressure in the region and in the headspace in the chamber.

### BRIEF DESCRIPTION OF THE ACCOMPANYING DIAGRAMS

The invention will now further be described, by way of example only, with reference to the accompanying diagrams wherein:
- Figure 1: is a diagrammatic side view, partially in section, of an example embodiment of a vessel for transferring a hot material from a source to a destination, illustrating an inlet to a body of the vessel closed and a valve assembly forming part of the vessel in a first axial position relative to the body wherein an outlet valve at an outlet from the body is also in a closed position;
- Figure 2: is an exploded view, partially in section, of the vessel suspended by cables above a hopper at the destination;
- Figure 3: is a diagrammatic side view, partially in section, of the vessel in gas tight sealing engagement with the hopper;
- Figure 4: is an enlarged view of a sealing region between the vessel and the hopper showing a cavity defined by the vessel which is in fluid flow communication with the hopper;
- Figure 5: is a view similar to figure 4, but with the cavity and hopper purged with an inert gas;
- Figure 6: is a view similar to figure 3, but with the vessel released by the cables and the valve assembly moving downwardly towards a second axial position relative to the body, to open a conduit valve at an inlet to a pressure balancing conduit forming part of the vessel;
- Figure 7: is an enlarged view in the region of the conduit valve and the inlet to the conduit;
- Figure 8: is a view similar to figure 3 with the valve assembly in the second axial position relative to the body and the outlet valve at the outlet in an open position; and
- Figure 9: is an enlarged view of the outlet valve region in figure 8.

### DESCRIPTION OF A PREFERRED EMBODIMENT OF THE INVENTION

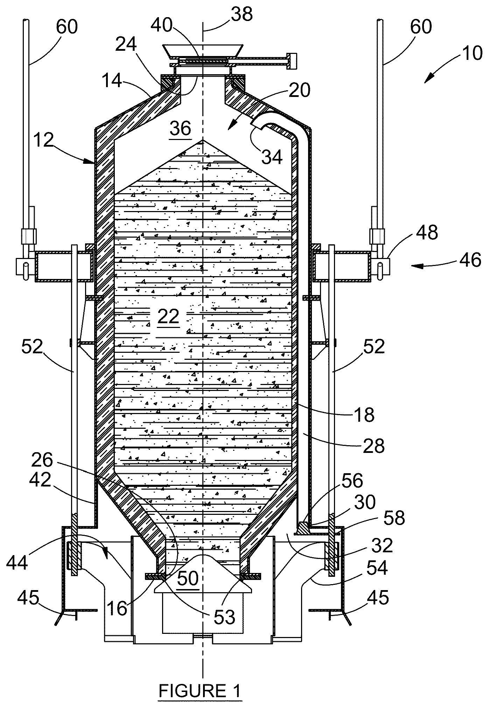

A vessel for transferring a hot material from a source (not shown) to a destination is generally designated by the reference numeral 10 in figures 1 to 9.

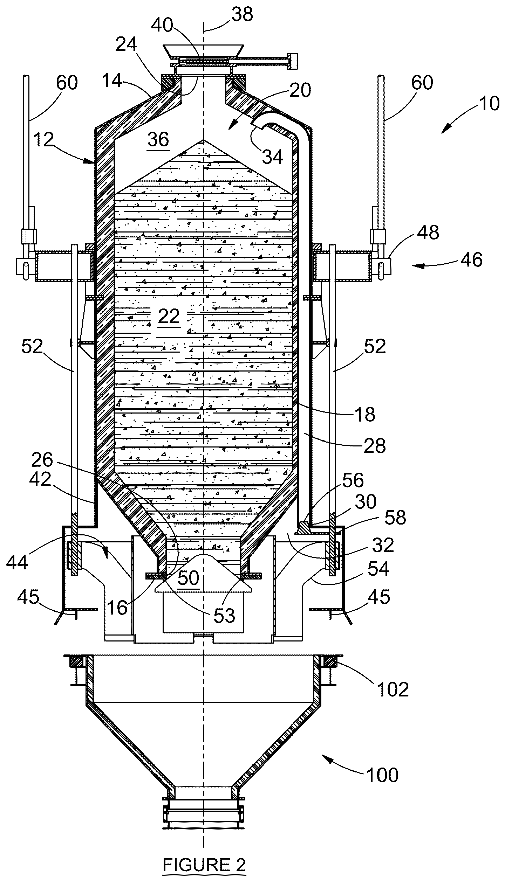

In an example application of the vessel 10, the source may be a direct reduction plant (DRP), the hot material may be hot direct reduced iron (HDRI) and the destination may be an electric smelting furnace (ESF) comprising an input material feed hopper 100 (shown in figures 2 to 9).

Referring to figure 1, the hot material transfer vessel 10 comprises a body 12 having a top 14, a bottom 16 and a sidewall 18 extending between the top and the bottom and defining a chamber 20 for holding the hot material 22 to be transferred. The vessel comprises a selectively openable and closable inlet 24 for the material into the chamber and an openable and closable outlet 26 for the material from the chamber. The vessel further comprises at least one pressure balancing conduit 28 extending between a first end 30 thereof located in a region 32 which is in gas flow communication with the outlet 26 and a second end 34 thereof communicating with a region 36 of the chamber towards the top of the body.

In the example embodiment, the body 12 is made of a refractory material. The body is elongate, preferably substantially circular cylindrical, and the inlet 24 and outlet 26 are defined on a main and longitudinal axis 38.

The at least one pressure balancing conduit 28 may be in the form of a bore defined in the sidewall 18. However, in a presently preferred embodiment, the conduit comprises a pipe embedded or cast into the sidewall 18.

The inlet 24 is openable and closable by a valve,such as a gate valve 40.

A first formation in the form of a depending skirt 42, for example, extends from a region towards the bottom of the body 18 downwardly to beyond the outlet 26 to define the region 32 in the form of a continuous and annular cavity 44 between the body 18 and the skirt 42. The outlet 26 is located in the cavity and the outlet 26 and the first end 30 of the pressure balancing conduit 28 are in gas flow communication with one another via the cavity. An annular sealing formation 45, which will be referred to further below, is provided on the skirt.

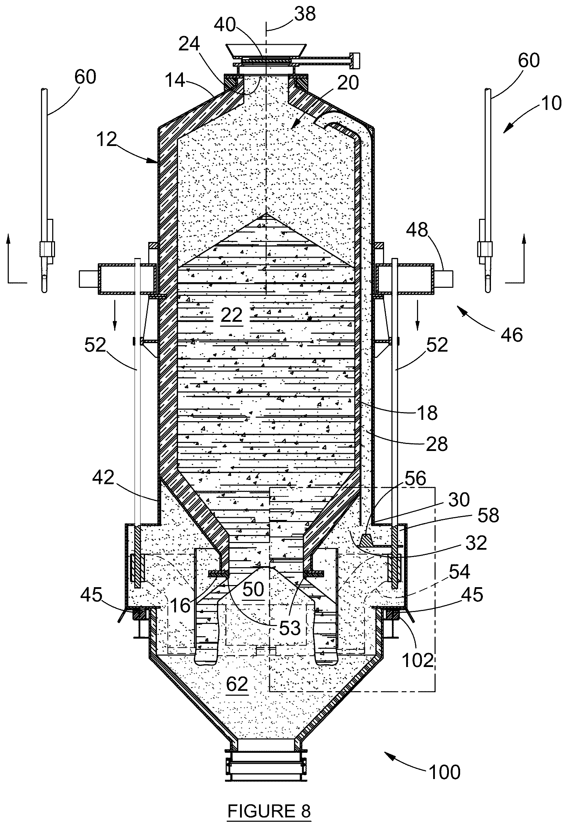

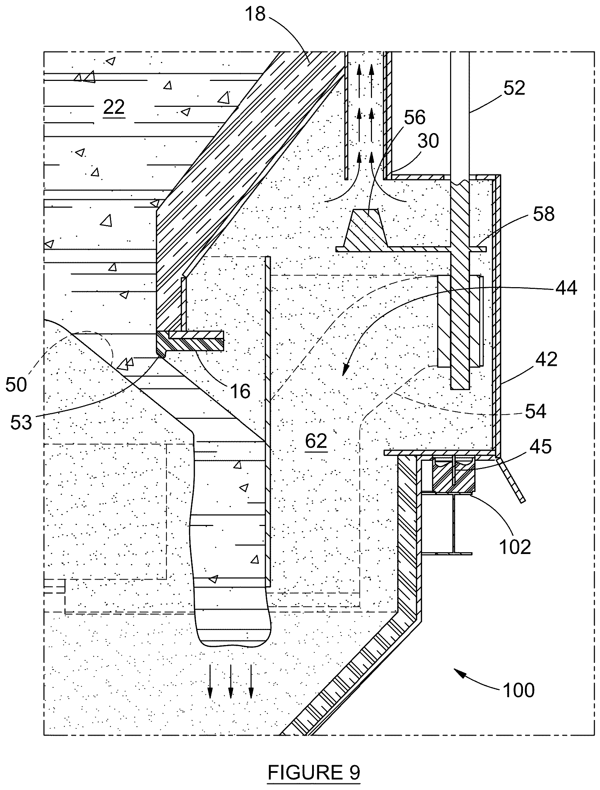

The vessel further comprises a valve assembly 46. The valve assembly comprises a vessel lifting formation in the form of a lifting ring 48 mounted coaxially with the body and an outlet valve 50 for the outlet 26. The lifting ring 48 is rigidly connected to the outlet valve 50 via at least one tie rod 52 extending parallel to the longitudinal axis and radially inwardly extending linking webs 54 between a respective tie rod and the valve. The assembly 46 is movable between a first axial position relative to the body (shown in figures 1 to 7) wherein the outlet valve 50 is in a closed position seating against a valve seat 53 at the outlet 26 and a second axial position relative to the body (shown in figures 8 and 9) wherein the outlet valve is in an open position spaced axially away from the valve seat 53.

The valve assembly 46 further comprises a conduit valve 56 cooperating with the first end 30 of the conduit 28. The conduit valve 56 is connected to one of the tie rods 52 by an arm 58. When the valve assembly 46 is in the first position, the conduit valve 56 is in a closed position relative to the first end 30 of the conduit 28 and when the assembly moves towards the second position, the conduit valve opens the first end of the conduit. Hence, when the valve assembly 46 is in the first position, both the outlet valve 50 and the conduit valve 56 are in their closed positions and when the assembly is in its second position, both the output valve 50 and the conduit valve 56 are in their open positions. However, a mechanical or other delay may be provided between firstly, opening of the conduit valve 56 and then the outlet valve 50 as the assembly moves from the first position towards the second position. Typically, one or both of the conduit valve 56 and the outlet valve 50 may be in the form of a plug, such as a conical or frustoconical plug.

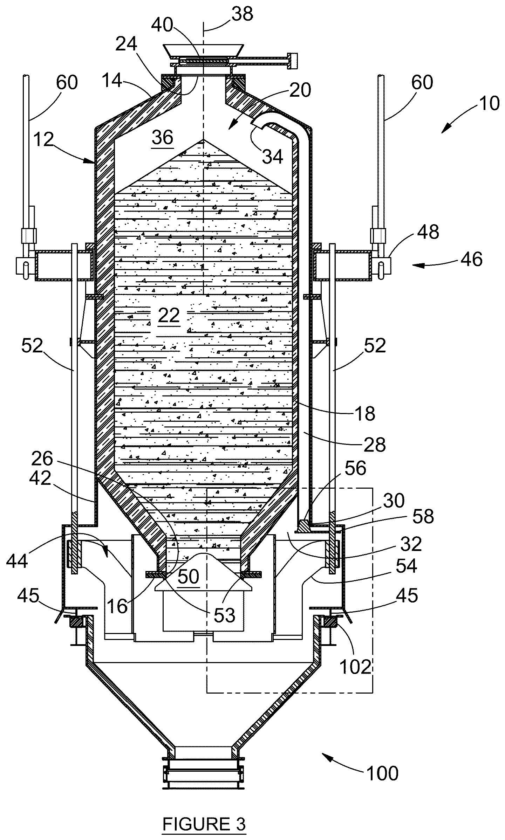

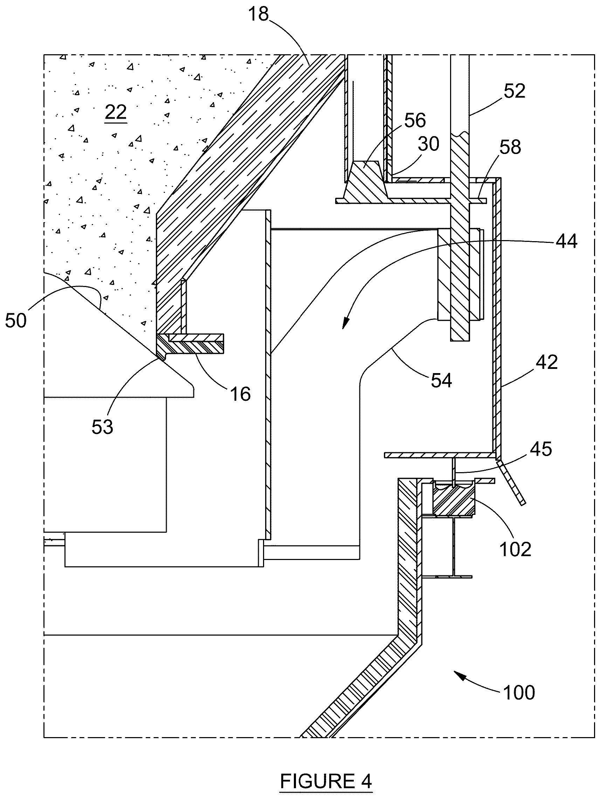

In use and at a source, with the inlet 24 open and the valve assembly 46 in the first position, the hot material 22 is loaded into the chamber 20. Referring to figure 2, with cables 60 suspended from a crane (not shown) connected to the lifting ring 48, the vessel 10 is moved from the source to the destination. Whilst so suspended and under the influence of the mass of the body 12 and hot material 22, the valve assembly 46 remains in the first position, that is with both the outlet valve 50 and the conduit valve 56 in their closed positions. At the destination, the suspended vessel is moved into position above the hopper 100. As shown in figures 3 and 4, the vessel 10 is lowered onto the hopper 100, with the above sealing formation 45 on the skirt in register with a cooperating sealing formation 102 on the hopper. Once a gas tight seal has been formed, the cables 60 are released to allow the vessel, under the influence of the mass of the vessel and material, to seat on the hopper.

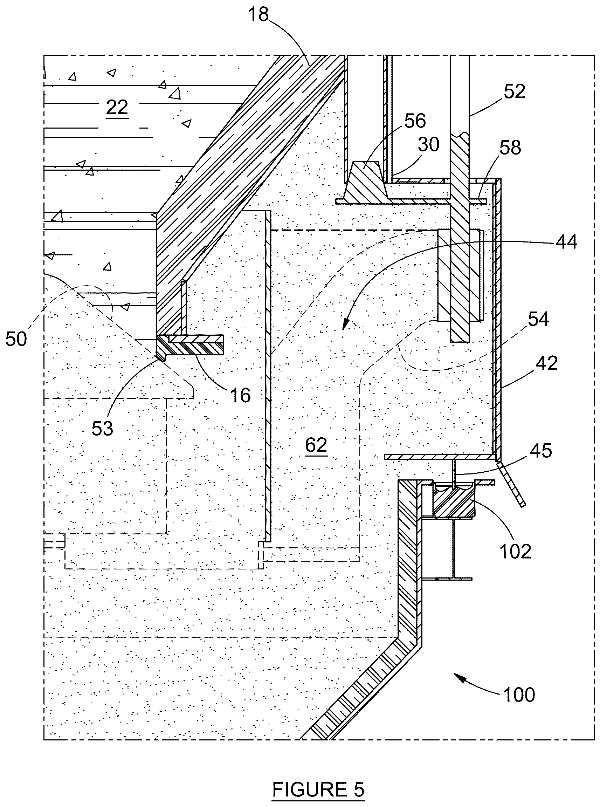

In a next step and as shown in figure 5, the cavity 44 is purged with an inert gas 62, such as nitrogen. The gas occupies the cavity and at least a top part of the hopper.

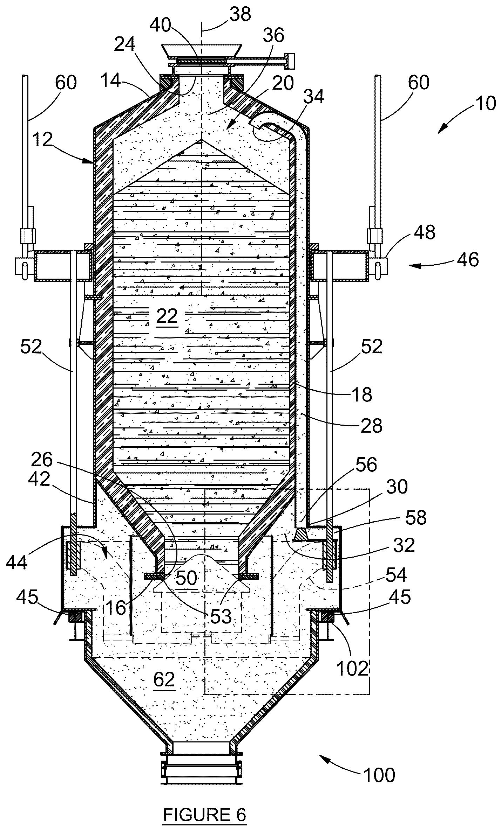

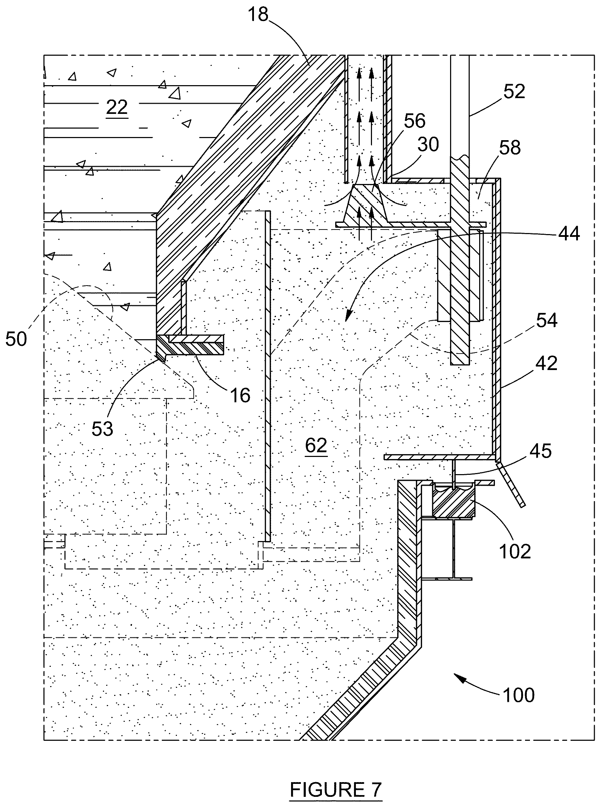

As shown in figures 6 and 7, as the valve assembly 46 automatically moves under the influence of gravity towards its second axial position, the conduit valve 56 opens the conduit 28 and the gas 62 moves through the pressure balancing conduit 28 to the region 36 towards the top of the body.

As shown in figures 8 and 9, as the valve assembly 46 moves further towards its second position, valve 50 moves away from its seat 53 and the material 22 moves through the outlet 26 into the hopper 100. The pressure balancing conduit 28 ensures that the pressure between the cavity 44 and the resulting increasing headspace in the region 36 towards the top of the body is equalized, thereby providing an inert atmosphere adjacent the material during charging of the ESF and preventing ingress of unwanted oxygen from the outside.

## Claims

1. A material transfer vessel (10) comprising
- a body (12) having a top (14), a bottom (16) and a sidewall (18) extending between the top and the bottom and defining a chamber (20) for holding the material (22);
- a selectively openable and closable inlet (24) for the material into the chamber;
- an openable and closable outlet (26) for the material from the chamber;
- at least one pressure balancing conduit (28) extending between a first end (30) thereof located in a region (32) which is in gas flow communication with the outlet (26) and a second end (34) thereof communicating with a region (36) of the chamber towards the top of the body;
- a first formation (42) extending from a region towards the bottom of the body and defining, together with the body, the region (32) which is in gas flow communication with the outlet (26);
- a sealing formation (45) located on the first formation and configured to sealingly engage a cooperating sealing formation (102) of a receptacle (100) to form a gas-tight connection between the vessel and the receptacle;
- a valve assembly (46) comprising an outlet valve (50) configured for opening and closing the outlet (26) and a respective conduit valve (56) configured for opening and closing the at least one pressure balancing conduit, the valve assembly being movable between a first position relative to the body in which the outlet valve is in a closed position and the respective conduit valve is in a closed position and a second position relative to the body in which the outlet valve is in an open position and the respective conduit valve is in an open position, such that, during discharge of the material while the vessel is in sealed engagement with the receptacle, pressure in the region (32) which is in gas flow communication with the outlet and pressure in a headspace in the chamber (20) are balanced via the pressure balancing conduit (28).

2. The vessel as claimed in claim 1 wherein at least part of the sidewall is made of refractory material.

3. The vessel as claimed in claim 2 wherein at least part of the pressure balancing conduit is formed integrally with the sidewall.

4. The vessel as claimed in claim 3 wherein the at least part of the conduit is in the form of a bore defined in the sidewall.

5. The vessel as claimed in claim 3 wherein the at least part of the conduit comprises a pipe embedded or cast into the sidewall.

6. The vessel as claimed in any one of claims 1 to 5 wherein the inlet is defined in the top of the body and the outlet is defined in the bottom of the body and wherein a main axis extends between the inlet and the outlet.

7. The vessel as claimed in any one of claims 1 to 6 wherein the first formation comprises a depending skirt (42) and wherein the region (32) which is in gas flow communication with the outlet comprises a cavity (44) defined between the body and the skirt.

8. The vessel as claimed in claim 7 wherein the sealing formation locates on the skirt in a position spaced from the outlet on an opposite side as the inlet.

9. The vessel as claimed in any one of claims 6 to 8 wherein the body is elongate and the main axis is a longitudinal axis.

10. The vessel as claimed in any one of claims 7 to 9 wherein the cavity circumscribes the outlet.

11. The vessel as claimed in claim 10 wherein the cavity is annular and the sealing formation is annular.

12. The vessel as claimed in any one of claims 1 to 11 wherein the respective conduit valve is located at the first end of the at least one pressure balancing conduit.

13. The vessel as claimed in any one of claims 9 to 12 wherein the valve assembly comprises a lifting formation for the vessel which circumscribes the body and at least one tie rod connecting the lifting formation to the outlet valve and to the respective conduit valve, the valve assembly being movable between a first axial position relative to the body wherein the outlet valve is in the closed position seating against a valve seat at the outlet and the respective conduit valve is in the closed position and a second axial position relative to the body wherein the outlet valve is in the open position spaced axially away from the valve seat and the respective conduit valve is in the open position.

14. The vessel as claimed in any one of claims 1 to 13 wherein the valve assembly comprises a delay means configured to cause, while the valve assembly moves from the first position towards the second position, a delay between firstly opening the respective conduit valve and then opening the outlet valve.

15. A method of transferring to a receptacle material from the vessel as claimed in any one of claims 1 to 14 , the method comprising:
- with the inlet (24) closed, the valve assembly (46) in the first position and the outlet valve (50) and the respective conduit valve (56) in their closed positions, bringing the sealing formation (45) of the vessel into sealing engagement with the cooperating sealing formation (102) on the receptacle (100), to form a gas tight fit of the vessel on the receptacle and the region (32) which is in gas flow communication with the outlet (26) in communication with the receptacle;
- purging the region with an inert gas;
- causing the valve assembly (46) to move from the first position to the second position, the respective conduit valve (56) to move to the open position and the outlet valve (50) to move to the open position;
- discharging the material (22) into the receptacle; and
- utilizing the at least one pressure balancing conduit (28) to balance the pressure in the region (32) and in the headspace in the chamber.
